# EUROPEAN PATENT SPECIFICATION

(11) **EP 3 700 857 B1**
(45) Date of publication and mention of the grant of the patent: **15.12.2021**
(21) Application number: 18792851.0
(22) Date of filing: 17.10.2018
(51) Int. Cl.: C01B 17/04, C01B 13/02, F25J 3/04, B01D 53/52, B01D 53/00, B01D 53/86

(54) **METHOD AND APPARATUS FOR TREATING A SOUR GAS MIXTURE**
VERFAHREN UND VORRICHTUNG ZUR BEHANDLUNG EINES SAUERGASGEMISCHES
PROCÉDÉ ET APPAREIL DE TRAITEMENT D'UN MÉLANGE DE GAZ IMPUR

(30) Priority: 24.10.2017 EP 17020493
(43) Date of publication of application: 02.09.2020
(73) Proprietor: Linde GmbH, 82049 Pullach (DE); WorleyParsons Group Inc., Monrovia, California 91016 (US)
(72) Inventor: NEUHAUS, Oliver, 82049 Pullach (DE); GUZMANN, Marcus, 82541 Münsing (DE); POLLITT, Steve, Hertfordshire EN6 4EJ (GB); LEWIS, Jon, Harrow Middx HA3 0QT (GB)
(74) Representative: Imhof, Dietmar
(86) International application number: PCT/EP2018/025267
(87) International publication number: WO 2019/081065

(56) References cited:
- EP-A2- 0 974 552
- US-A1- 2015 191 360
- US-B1- 6 287 535
- US-B1- 6 508 998

## Description

The present invention relates to a method for treating a sour gas mixture and to a corresponding apparatus according to the preambles of the independent claims.

### Prior art

Methods and apparatus for treating sour gas mixtures based on the Claus process are known from the prior art. Reference is e.g. made to the article "Natural Gas" in Ullmann's Encyclopaedia of Industrial Chemistry, on-line publication 15 July 2006, DOI: 10.1002/14356007.a17_073.pub2, especially chapter 2.4, "Removal of Carbon Dioxide and Sulfur Components." Claus processes are also disclosed in US 2015/0191360 A1, US 6,287,535 B1 and EP 0 974 552 A2.

The Claus process originally only mixed hydrogen sulphide or a corresponding sour gas mixture with oxygen and passed the mixture across a pre-heated catalyst bed. It was later modified to include a free-flame oxidation upstream the catalyst bed in a so-called Claus furnace. Most of the sulphur recovery units (SRU) in use today operate on the basis of a correspondingly modified process. If, in the following, therefore, shorthand reference is made to a "Claus process" or a corresponding apparatus, this is intended to refer to a free-flame modified Claus process as just described.

So-called oxygen enrichment is a well-known economic and reliable method of debottlenecking existing Claus sulphur recovery units with minimal capital investment. Oxygen enrichment is, however, as described in detail below, not limited to retrofitting existing Claus sulphur recovery units but can likewise be advantageous in newly designed plants. The "term oxygen enrichment" shall, in the following, refer to any method wherein, in a Claus sulphur recovery unit or in a corresponding method, at least a part of the air introduced into the Claus furnace is substituted by oxygen or a by gas mixture which is, as compared to ambient air, enriched in oxygen or, more generally, has a higher oxygen content than ambient air.

According to US 6,508,998 B1, an oxygen-enriched Claus plant is improved by recycling effluent from the first condenser back to the reaction furnace through an ejector in order to moderate oxygen induced high temperatures and thus allow additional oxygen-enrichment and attendant throughput in the Claus plant.

Oxygen or oxygen enriched gas mixtures for Claus sulphur recovery units can be, in general, provided by cryogenic air separation methods and corresponding air separation units (ASU) as known from the prior art, see e.g. Haering, H.-W., "Industrial Gases Processing," Wiley-VCH, 2008, especially chapter 2.2.5, "Cryogenic Rectification." Cryogenic air separation units typically comprise a so-called warm section configured for compression, pre-cooling, drying and pre-purification of feed air, and a so-called cold section configured for heat exchange and rectification.

While the present invention is, in the following, described with a focus on cryogenic air separation, it can likewise be used with advantage with non-cryogenic air separation methods and units, e.g. based on pressure swing adsorption (PSA), particularly with desorption pressure levels below atmospheric pressure (Vacuum PSA, VPSA).

An object of the present invention is to provide improved means for treating sour gas mixtures including a Claus process operated with oxygen enrichment.

### Disclosure of the invention

In view of the above, the present invention discloses a method for treating a sour gas mixture and to corresponding apparatus including the features of the independent claims, respectively. Advantageous embodiments are the subject of the dependent claims and of the description that follows.

Before specifically referring to the features and advantages of the present invention, some terms used herein will be defined and briefly explained. Furthermore, the operating principle of a Claus sulphur removal unit will be further explained.

In the language as used herein, a mixture of components, e.g. a gas mixture, may be rich or poor in one or more components, where the term "rich" may stand for a content of more than 75%, 80%, 85%, 90%, 95%, 99%, 99.5% or 99.9% and the term "poor" for a content of less than 25%, 20%, 15%, 10%, 5%, 1%, 0.5% or 0.1%, on a molar, weight or volume basis. As mentioned below, in the field of sour gas treatment, a sour gas mixture with a hydrogen sulphide content of more than 80% is generally referred to as "rich" while a sour gas mixture containing less hydrogen sulphide is generally referred to as "lean." A mixture may also be, in the language as used herein, enriched or depleted in one or more components, especially when compared to another mixture, where "enriched" may stand for at least 1, 5 times, 2 times, 3 times, 5 times, 10 times or 100 times of the content in the other mixture and "depleted" for at most 0.75 times, 0.5 times, 0.25 times, 0.1 times, or 0.01 times of the content in the other mixture.

The term "sour gas mixture" refers, in the language as used herin, to a gas mixture containing hydrogen sulphide and carbon dioxide in a common amount of at least 50%, 75%, 80% or 90% by volume. Further components may be present in a sour gas mixture as well, particularly water, hydrocarbons, benzene, toluene and xylenes (BTX), carbon monoxide, hydrogen, ammonia and mercaptans.

The terms "pressure level" and "temperature level" are used herein in order to express that no exact pressures but pressure ranges can be used in order to realize the invention and advantageous embodiments thereof. Different pressure and temperature levels may lie in distinctive ranges or in ranges overlapping each other. They also cover expected and unexpected, particularly unintentional, pressure or temperature changes, e.g. inevitable pressure or temperature losses. Values expressed for pressure levels in bar units are absolute pressure values.

Compressors for use in air separation units, be it of the cryogenic or the non-cryogenic type, can be designed as turbo or positive displacement machines, the two types differing in their operational behaviour. With turbo machines, the amount of compressed gas decreases with increasing pressure, while in positive displacement machines nearly a constant mass flow independently from the discharge pressure of the compressor can be achieved. Multiple-stage turbo compressors are by far the most frequently used machines in cryogenic air separation. Turbo compressors can be of the radial or the axial type. They differ from each other in the direction by which the compressed gas leaves the impeller. A radial turbo compressor is made up of several stages which are arranged on one or more shafts. These shafts are driven via a gear either by an electric motor or a steam turbine. Air compressed in a main air compressor (MAC), e.g. of the turbo type, of an air separation unit is heated by the compression typically to about 100 °C and is therefore, prior to being cooled via a heat exchange with air separation products, typically pre-cooled with water.

If, in the following, the term "main air compressor" is used, this term is intended to refer to that compressor or these compressors of a cryogenic or non-cryogenic air separation unit which compress(es) all the air to be separated to a certain pressure level. A main air compressor may be followed by a booster air compressor (BAC) or several boosters driven by turbines. The latter machines, however, are only used for parts of the air previously compressed by the main air compressor. Herein, a main air compressor and a booster air compressor are to be understood as machines entirely or at least partially driven by external energy, the term "external energy" referring to energy which was not obtained by expanding process streams formed in the air separation unit itself.

In classical cryogenic air separation units as shown in Figure 2.3Ain Haering, all the feed air into the rectification column system is compressed to a pressure at or slightly above the operating pressure of the high pressure column in the main air compressor, and only a part of the air such compressed is further compressed to a higher pressure in a so-called booster air compressor. Such classical configurations are often also referred to as "MAC/BAC" configurations. In contrast, in more recent so-called "high air pressure" ("HAP") configurations, all the feed air is compressed in the main air compressor to a pressure significantly, i.e. at least 2, 3, 4, 5 or 10 bar, and up to 20 bar or more, above the operating pressure of the high pressure column. This does, however, not exclude that parts of the air such compressed are further compressed in booster air compressors or other further machines. High air pressures configurations are known from EP 2 466 236 A1, EP 2 458 311 A1 and US 5,329,776 A.

Turbo compressors are cost-intensive components and the investment for compressors including their drive units amounts to typically 15 to 20% of the total investment of an air separation unit. Approximately 90% of the total energy consumption of a cryogenic air separation unit is charged to the compressors. Fans, blowers and compressors are often differentiated from each other by the specific pressure ratio, i.e. the ratio of the pressure at the outlet of the delivery to that of the pressure at the inlet. Thus, the specific pressure ratio defines the extent up to which the fluid is compressed. The specific pressure ratio is typically up to 1.11 for a fan, from 1.11 to 1.20 for a blower, and more than 1.20 for a compressor.

A sour gas mixture used as a feed for a Claus sulphur recovery unit usually originates from an acid gas sweetening plant, e.g for natural gas or a gas from a petrochemical or oil refinery plant. The sour gas mixture, containing varying amounts of hydrogen sulphide and carbon dioxide, is saturated with water and frequently also contains small amounts of hydrocarbons and other impurities in addition to the principal components. In a typical Claus sulphur recovery unit, the sour gas mixture enters at about 0.5 barg and 50 °C. In classical Claus sulphur recovery units, combustion air is compressed to an equivalent pressure by centrifugal blowers. Both inlet streams then flow to a burner which fires into the Claus furnace, the burner being fed with a further fuel.

The gas mixture from the Claus furnace, at a temperature of typically up to 1,400 °C, is typically cooled while generating steam in a waste heat boiler and further cooled while producing low-pressure steam in a separate heat exchanger. This cools the hot gases to approximately 160 °C, condensing most of the sulphur which has already formed up to this point. The resultant liquid sulphur is removed in a separator section of the condenser and flows by gravity to a sulphur storage tank. Here it is kept molten, at approximately 140 °C, by steam coils. Sulphur accumulated in this reservoir is pumped to trucks or rail cars for shipment.

Any further conversion of the sulphur gases still contained in the gas mixture from the Claus furnace must be done by catalytic reaction. The gas mixture is therefore reheated by one of several means and is then introduced to the catalyst bed. The catalytic Claus reaction releases more energy and converts more than half of the remaining sulphur gases to sulphur vapour. This vapour is condensed while generating low-pressure steam and is removed from the gas mixture. The remaining gas mixture is reheated and enters the next catalytic bed. This cycle of reheating, catalytic conversion and sulphur condensation is repeated in two to four catalytic steps. A typical Claus sulphur recovery unit comprises one free-flame reaction stage, i.e. one furnace, and three catalytic reaction stages. Each reaction step converts a smaller fraction of the remaining sulphur gases to sulphur vapour.

If a three-stage or four-stage sulphur recovery unit cannot meet the required emission levels in the gas mixture obtained after the last catalytic reaction stage, i.e. in the so-called tail gas, further processing is required. This involves a so-called tail gas treatment unit (TGTU), which generally can be configured to perform a dry bed processes and wet scrubbing processes. Dry bed processes such as the Amoco cold bed adsorption (CBA) process use the same catalytic Claus reaction as the standard Claus sulphur removal unit, except that they are operated below the sulphur dew point temperature. As the sulphur forms it is deposited on the catalyst. Once the catalyst bed has adsorbed a sufficient quantity of sulphur, it is regenerated to strip the sulphur from the catalyst and recover it. Wet scrubbing processes, such as the BSR/amine process of WorleyParsons include a front-end section to convert all of the sulphur compounds still contained in the tail gas back into hydrogen sulphide. After cooling, the hydrogen sulphide-containing tail gas is contacted with a solvent to remove the hydrogen sulphide, much like in a conventional gas treating plant. The solvent is then regenerated to strip out the hydrogen sulphide, which is then recycled to the upstream Claus sulphur removal unit for subsequent conversion and recovery.

Concentration levels of hydrogen sulphide in sour gas mixtures vary significantly depending upon their source. Sour gases produced from absorption processes, such as amine treating of natural gas or refinery gas, can contain from 15 to 95% hydrogen sulphide by volume or higher. Generally, as previously mentioned, in the field of sour gas treatment, sour gas mixtures with 80% or more hydrogen sulphide by volume are referred to as "rich" while sour gas mixtures with a lower content are referred to as "lean."

So-called oxygen enrichment is, as mentioned, a well-known economic and reliable method of debottlenecking existing Claus sulphur recovery units with minimal capital investment. It can also eliminate the need for fuel gas co-firing in the reaction furnace, required to maintain the correct temperature for contaminant destruction, for example for destruction of benzene, toluene and xylenes in the acid gas mixture. Generally, higher temperatures are required to maintain a stable flame (above about 1.000 °C) and also to destroy BTX and/or ammonia (present in refinery sour water stripper gas). Whether or not a corresponding co-firing is required particularly depends on the hydrogen sulphide content of the sour gas mixture treated and whether a sufficient temperature and a stable flame can be obtained by burning the sour gas mixture alone.

The concept of oxygen enrichment entails replacing part or all of the air fed to the Claus furnace by enriched air or pure oxygen. Correspondingly, the volumetric flow through the Claus sulphur recovery unit decreases, allowing more of the acid gas mixture to be fed to the system. This results in an increased sulphur production capacity without the need for significant modifications to existing equipment or major changes to the process plant pressure profile.

The application of oxygen enrichment is not limited to retrofitting or debottlenecking existing Claus sulphur recovery units, but can also have advantages in newly designed plants where the acid gas mixtures obtained are lean and contain benzene, toluene and xylenes. Such plants classically require feed gas and/or combustion air preheating and the use of fuel gas co-firing and have not, historically, been considered for oxygen enriched operation. However, also in such plants, the use of oxygen enriched technology results in a reduction in the physical size of all major equipment items and an associated, significant reduction in capital cost. Particularly, a large reduction in fuel requirements in co-firing in the Claus furnace and other units can be achieved and therefore more fuel, e.g. natural gas, can be used for other purposes or provided as a product of the whole plant.

A particular advantage of oxygen enrichment is, furthermore, that the tail gas downstream a tail gas treatment unit is less "diluted" with nitrogen from the combustion air classically used. If little or no additional nitrogen is introduced into the process, the main component of the sour gas mixture after desulphurisation, i.e. carbon dioxide, and other components like hydrogen can be obtained in a simpler and more cost-effective way, e.g. by cryogenic technology alone and without energy-intensive wet technology.

### Advantages of the invention

The present invention is based on the finding that, using two different operating modes, an apparatus for sour gas treatment using the Claus process can be combined with an air separation unit with particular advantage, utilizing synergy effects between the two processes. In a first operation mode, the Claus process or, more specifically, the Claus furnace, is operated with air, i.e. in a non-oxygen enriched manner, while in a second operation mode an oxygen enriched operation is performed.

Air separation units, irrespective whether they are based on cryogenic processes or adsorption processes, require compressors in order to process the air being used as feedstock. Claus sulfur removal units conventionally are operated by introducing ambient air through blowers into the Claus furnace in order to introduce the oxygen contained in ambient air as reaction component. An improved method is, as mentioned, an oxygen enriched operation wherein, at least a part of ambient air is exchanged for pure oxygen or a gas mixture which has a higher oxygen content than that of ambient air. For example, pure oxygen or an oxygen enriched gas mixture can be mixed into an air flow blown into the Claus furnace by a blower, in which case the amount of air is reduced correspondingly, in order to maintain a defined mass flow. Alternatively, a blower is no longer used for introducing air to the Claus furnace and only oxygen or an oxygen enriched gas mixture can be used in order to provide oxygen for burning. In this case, the blower for the main air to the Claus furnace is eliminated. The much smaller air blowers for a reducing gas generator and a tail gas incinerator (if present, respectively) can be further reduced in size.

Particularly in the latter case, a blower is not at all required during normal operation of the Claus furnace. Also in the former case, however, during normal operation less air has to be introduced into the Claus furnace, resulting in a smaller capacity demand for the blower. However, during start-up of the process, a blower may still technically be required because the process is started up with ambient air and then gradually boosted by oxygen enrichment up to the desired level, e.g. up to 100% or at least 100% oxygen. Particularly, a corresponding plant must be warmed up before the main burner is ignited, in order to avoid thermal shock etc. In order to do this, fuel gas will be burned with air (introduced with a blower) in the Claus furnace at start up.

In other words, during the operation of an oxygen enriched Claus sulphur removal process ("oxygen enriched," as mentioned, also referring to an operation with pure oxygen), the blower capacity could be significantly reduced or the blower could entirely be dispensed with. However, for the start-up of the Claus sulphur removal unit, ambient air is still required in larger amounts and as such the blower needs to be installed with a capacity of 100% (based on oxygen supply through conventional air injection).

The air separation unit used in the present invention is dedicated to supply the oxygen to the Claus sulphur removal unit with the objective to operate the Claus sulphur removal unit on an oxygen enriched or 100% oxygen fueled basis. However, during the start-up of the Claus sulphur removal unit, no oxygen is required because, as mentioned, oxygen content of the feed into the Claus sulphur removal unit will be gradually increased. During this period, the main air compressor being required for the air separation unit can be used, according to the present invention, to provide the air flow into the Claus unit. The required air pressure level for the feed into the Claus sulphur removal unit, here referred to as feed pressure level, is between 0,5 to 3,5 barg (bar gauge pressure).

The air separation can be turned off at this stage of Claus sulphur removal unit startup or could be run in a turndown mode. While the oxygen enrichment level into the Claus sulphur removal unit is gradually increased, the air volume required by the Claus sulphur removal unit may accordingly be reduced gradually. Therefore, the main air compressor can provide a gradually increasing air volume to the air separation process which in turn can provide gradually increasing amounts of air separation products. Generally, an "air separation product" refers to any fluid which can be obtained by cryogenic or non-cryogenic air separation, which contains one or more components of ambient air in a higher or lower content than ambient air, i.e. which is enriched or depleted in the meaning above. Particularly, an air separation product as used in the context of the present invention is an oxgen rich or oxygen enriched air separation product or (essentially) pure oxygen.

In view of this, the present invention provides a method of treatment of a sour gas mixture by means of a Claus process, wherein the sour gas mixture contains hydrogen sulphide and carbon dioxide, wherein the sour gas mixture is introduced into a Claus furnace, and wherein a part of the hydrogen sulphide in the sour gas mixture is oxidized by free-flame oxidation in the Claus furnace.

According to the present invention, the method comprises a first operation mode in which an amount of air is fed into the Claus furnace in order to provide oxygen for the free-flame oxidation, and a second operation mode in which instead of at least a part of the amount of air, pure oxygen or a gas mixture comprising an oxygen content higher than that of ambient air is introduced into the Claus furnace in order to provide the oxygen for the free-flame oxidation.

According to the present invention, in the first operation mode the amount of air is at least in part provided in the form of air compressed by a main air compressor of an air separation unit and in the second operation mode the pure oxygen or the gas mixture comprising an oxygen content higher than that of ambient air is at least in part provided in the form of an air separation product provided by the air separation unit. The air compressed by the main air compressor of the air separation unit which is used in the first operation mode particularly still has the composition of ambient air but may be dried or pre-purified, according to the present invention. In case of a cryogenic air separation unit, the air separation product is a liquid or gaseous, oxygen-rich or oxygen-enriched fluid withdrawn from a rectification column system.

According to the present invention, a compressor or blower for the Claus process can be dispensed with because particularly in situations in which this compressor or blower would be needed for providing compressed air to the Claus furnace, i.e. particularly during start-up, this air is provided by the main air compressor of the air separation unit instead. The main air compressor of the air separation unit, which is not needed during such periods for providing air to the air separation unit because no demand for oxygen or oxygen-enriched air products exists, can thus be put to an advantageous use. According to the present invention, none of the compressors is idle during extended periods of time, as would be the case when a mere side-by-side operation of an air separation process and a Claus process would be performed.

According to a particularly preferred embodiment of the present invention, the method comprises an intermediate operation mode wherein the amount of air fed into the Claus furnace is substituted by the pure oxygen or by the gas mixture comprising an oxygen content higher than that of ambient air in a gradual or stepwise manner, in order to switch from the first operation mode to the second operation mode. This increase in the oxygen content used in the Claus furnace was already described before. It also allows for a gradual increase in the production amount of the air separation unit and, correspondingly, a gradual or stepwise decrease in the amount of air provided by the main air compressor of the air separation unit, whose air can then gradually be provided to the air separation unit instead.

The amount of air is advantageously fed into the Claus furnace in the first operation mode at a feeding pressure level between 0,5 and 4 barg, preferably 0,5 to 1,8 barg. Such a pressure level can be provided by a main air compressor of an air separation unit which is, in the case of a cryogenic air separation unit, configured to provide a substantially higher pressure. As explained in the following, different alternatives exist in order to provide the air at the feeding pressure level instead.

In one alternative, the amount of air fed into the Claus furnace in the first operation mode can be withdrawn from the main air compressor at the feeding pressure level while further air is compressed in the main air compressor to an end pressure level higher than the feeding pressure level. The air used in the Claus furnace may be, e.g. withdrawn from the main air compressor at an inter stage pressure. In this alternative, the further air can be used for providing one or more air products like oxygen or oxygen enriched air which, while not yet needed in the first operation mode, can be stored for later use or different purposes. Preferably these gases are stored in form of liquefied gases. The amount of air products produced in the first operation mode may be reduced by the amount of air used in the Claus furnace, or the total amount of air may be compressed in the main air compressor may be increased accordingly, in order to maintain a constant production of air products.

In another alternative, the amount of air fed into the Claus furnace in the first operation mode is taken from the main air compressor together with further air compressed in the main air compressor at an end pressure level higher than the feeding pressure level and is then expanded to the feeding pressure level. Doing so, the air used in the Claus furnace may be used to generate additional cold in the air separation unit. Like in the other alternative described above, the production amount may be reduced by the amount of air used in the Claus furnace or may be kept constant by increasing the overall amount of air compressed.

As mentioned, the present invention may particularly be used in connection with a cryogenic air separation unit comprising a rectification column system. In this case, the end pressure level may be at or above a highest operating pressure of the rectification column system, or, alternatively, the end pressure level may be at least 4 bar, and up to 20 bar, above the highest operating pressure of the rectification column system. In other words, the present invention may also be used in connection with a high air pressure method as described above.

In a yet further alternative to the alternatives above, all air can be withdrawn from the main air compressor in the first operating mode at the feeding pressure. This requires the main air compressor to operate at a reduced end pressure in the first operating mode, and might require air separation to be suspended correspondingly.

Generally, as mentioned, an amount of air products withdrawn from air separation system may be lower in the first operation mode than in the second operation mode, or an operation of the air separation unit may be suspended in the first operation mode. Suspending the operation of the air separation unit can particularly include that only the main air compressor is running and booster air compressors or other air compressors or boosters are suspended.This particularly possible if products of the air separation unit are not used for other applications than the Claus sulphur removal unit.

It may be of particular advantage if the amount of air which is withdrawn from the main air compressor and fed into the Claus furnace in the first operation mode is at a temperature level of 20 to 150 °C, which is particularly a temperature level resulting from the compression. Thus, such air needs not or only in part to be further heated when being introduced into the Claus sulphur removal unit.

Generally, the gas mixture comprising an oxygen content higher than that of ambient air which may be used in the second operation mode can comprise at least 30%, 40%, 50%, 60%, 70%, 80%, 90% or 95% oxygen by volume. In other words, different levels of oxygen enrichment are possible. Also essentially pure oxygen may be used. The air separation unit may also provide partly enriched oxygen products depending on the specific requirements of the Claus sulphur removal unit, and thus the energy consumption of the air separation unit can be optimized accordingly. Particularly, a cryogenic air separation unit including a mixing column can be used for this purpose, as e.g. described in EP 3 179 187 A1 and the references cited therein.

Particular advantages can be achieved if only gases or gas mixtures which are poor in or free from nitrogen are introduced into the Claus furnace in the second operation mode. Doing so, almost pure carbon dioxide, possibly containing hydrogen, can be obtained. For specific advantages, reference is made to the further explanations above.

An apparatus of treatment of a sour gas mixture by means of a Claus process, wherein the sour gas mixture contains hydrogen sulphide and carbon dioxide and wherein means are provided which are configured to introduce the sour gas mixture into a Claus furnace and to oxidize a part of the hydrogen sulphide in the sour gas mixture by free-flame oxidation in the Claus furnace is also subject of the present invention.

According to the present invention, means are provided which are configured to operate the apparatus in a first operation mode in which an amount of air is fed into the Claus furnace in order to provide oxygen for the free-flame oxidation, and to operate the apparatus in a second mode in which instead of at least a part of the amount of air pure oxygen or a gas mixture comprising an oxygen content higher than that of ambient air is introduced into the Claus furnace in order to provide the oxygen for the free-flame oxidation. The apparatus is configured to provide, in the first operation mode, the amount of air at least in part in the form of air compressed by a main air compressor of an air separation unit and the apparatus is configured to provide, in the second operation mode, the pure oxygen or the gas mixture comprising an oxygen content higher than that of ambient air at least in part in the form of an air separation product provided by the air separation unit.

As to specific further features and embodiments of such an apparatus, reference is made to the explanations above relating to the method according to the invention and its advantageous embodiments. This equally applies for a corresponding apparatus which is adapted to perform a corresponding method or one of its embodiments.

The present invention will further be described with reference to the appended drawings which relate to a preferred embodiment of the present invention.

### Short description of the drawings

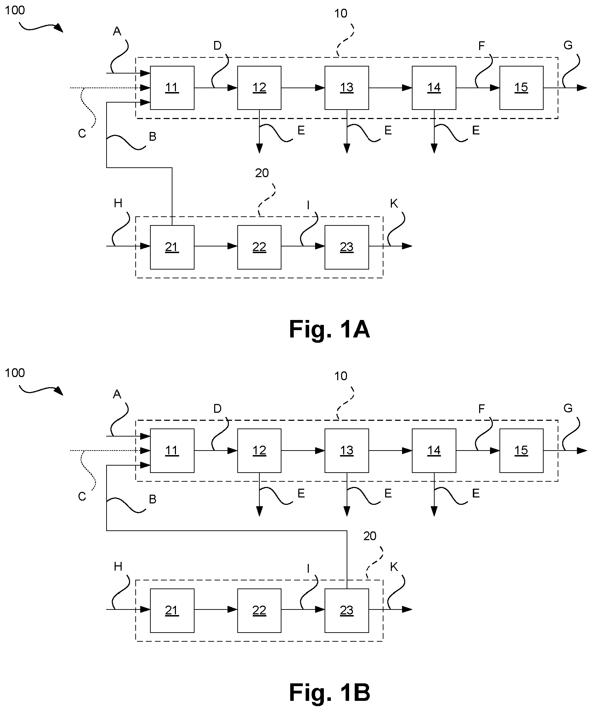

Figures 1A and 1B schematically illustrate a method according to an embodiment of the present invention in a first and second operation mode.

### Detailed description of the drawings

Figures 1A and 1B schematically illustrate a method 100 according to an embodiment of the present invention in a first (Figure 1A) and a second (Figure 1B) operation mode. The method 100 includes using a Claus sulphur removal unit, commonly referred to with 10, and an air separation unit, commonly referred to with 20.

To the Claus sulphur removal unit 10, a stream A of a sour gas mixture, e.g. provided by a natural gas sweetening unit (not shown) is provided. The sour gas mixture of stream A may be pre-purified or dried in one or more corresponding upstream processing units (not shown in the Figures).

The sour gas mixture of stream A is introduced, together with a further gas stream B, into a Claus furnace 11 of the Claus sulphur removal unit 10. In the first operation mode shown in Figure 1A, the further gas stream B is a stream of air compressed in a main air compressor 21 of the air separation unit 10. In the second operation mode shown in Figure 1B, the further gas stream B is a stream of an air separation product provided by the air separation unit 10, e.g. oxygen or a gas mixture with a higher oxygen content than ambient air. Optionally, a small blower may be required for the oxygen in case its pressure is too low. Such a blower is not shown in the schematic drawings of Figures 1A and 1B.

As illustrated with a dashed arrow, optionally a further gas stream C can be introduced into the Claus furnace 11 of the Claus sulphur removal unit 10. This is particularly a fuel stream used for co-firing which is used, as explained above, if the hydrogen sulphide content of the sour gas mixture of stream A is too low to maintain a stable flame or to attain the required temperature in the Claus furnace.

In the Claus furnace 11 of the Claus sulphur removal unit 10, part of the hydrogen sulphide contained in the sour gas mixture of stream A is converted and a gas mixture D is obtained which is, in the example illustrated, introduced in three catalytic stages 12, 13, 14. Cooling and heating steps downstream the Claus furnace 11 and between and after the three catalytic stages 12, 13, 14 are not shown for reasons of conciseness and reference is made to expert literature. Cooling steps are particularly included in order to condense out the sulphur formed in the furnace and catalytic reactors, and subsequent heating is performed in order to again bring the remaining gas mixture to a temperature at which the catalytic reaction can be performed. In each of the three catalytic stages 12, 13, 14 or downstream thereof, sulphur is obtained in form of streams E.

Downstream the last catalytic stage 14, a tail gas stream F is obtained which is, in the example shown in Figures 1A and 1B, introduced into a tail gas treatment unit (TGTU) 15. Therein, a tail gas treatment is performed as generally known from the prior art. It should be understood that using a tail gas treatment unit is an optional part of the method, particularly if sulphur recovery efficiencies of less than 97% can be accepted. Therefore, the present invention is not limited to methods wherein a tail gas treatment unit is used. Particularly, in the tail gas treatment unit 15, instead of air, an oxygen rich or enriched gas mixture or pure oxygen may be used. A tail gas is withdrawn from the tail gas treatment unit 15, if present, in form of a stream G.

The air separation unit 20 comprises, besides the main air compressor 21, to which an air steam H is provided, an air purification system 22 and an air separation system 23. The air separation system 23 comprises, in case of a cryognic air separation unit 20, a main heat exchanger and a rectification column system to which a purified air stream I is provided and from which the air separation product of stream B may be withdrawn. Further air separation products, commonly shown as a stream K, may also be provided, as commonly known in the field of air separation.

## Claims

1. A method (100) of treatment of a sour gas mixture by means of a Claus process (10), wherein the sour gas mixture contains hydrogen sulphide and carbon dioxide, wherein the sour gas mixture is introduced into a Claus furnace (11), and wherein a part of the hydrogen sulphide in the sour gas mixture is oxidized by free-flame oxidation in the Claus furnace (11), **characterized in that** the method (100) at least comprises a first operation mode in which an amount of air is fed into the Claus furnace (11) in order to provide oxygen for the free-flame oxidation, and a second mode in which instead of at least a part of the amount of air pure oxygen or a gas mixture comprising an oxygen content higher than that of ambient air is introduced into the Claus furnace (11) in order to provide the oxygen for the free-flame oxidation, wherein in the first operation mode the amount of air is at least in part provided in the form of air compressed by a main air compressor (21) of an air separation unit (20), and wherein in the second operation mode the pure oxygen or the gas mixture comprising an oxygen content higher than that of ambient air is at least in part provided in the form of an air separation product provided by the air separation unit (20).

2. The method (100) according to claim 1, comprising an intermediate operation mode wherein the amount of air fed into the Claus furnace (11) substituted by the pure oxygen or by the gas mixture comprising an oxygen content higher than that of ambient air in a gradual or stepwise manner, in order to switch from the first operation mode to the second operation mode.

2. The method (100) according to claim 1 or 2, wherein the amount of air is fed into the Claus furnace (11) in the first operation mode at a feeding pressure level between 1 and 3 bar.

3. The method (100) according to claim 2, wherein the amount of air fed into the Claus furnace (11) in the first operation mode is taken from the main air compressor (21) at the feeding pressure level and wherein further air is compressed in the main air compressor (21) to an end pressure level higher than the feeding pressure level.

4. The method (100) according to claim 2, wherein the amount of air fed into the Claus furnace (11) in the first operation mode is taken from the main air compressor (21) together with further air compressed in the main air compressor (21) at an end pressure level higher than the feeding pressure level and is then expanded to the feeding pressure level.

5. The method (100) according to any one of claims 3 or 4, wherein the air separation unit (20) is a cryogenic air separation unit (20) comprising a rectification column system (24), and wherein the end pressure level is at or above a highest operating pressure of the rectification column system (24).

6. The method (100) according to claim 5, wherein the end pressure level is at least 4 bar above the highest operating pressure of the rectification column system (24).

7. The method (100) according to claim 1 of 2, wherein all air is taken from the main air compressor (21) in the first operating mode at the feeding pressure level.

8. The method (100) according to any one of the preceding claims, wherein an amount of air products withdrawn from the air separation unit (20) is lower in the first operation mode than in the second operation mode.

9. The method (100) according to any one of the preceding claims wherein an operation of the air separation unit (20) is suspended in the first operation mode.

10. The method (100) according to any one of the preceding claims wherein the amount of air is withdrawn from the main air compressor (21) and fed into the Claus furnace (11) in the first operation mode at a temperature of 20 to 150 °C.

11. The method (100) according to any one of the preceding claims wherein the gas mixture comprising an oxygen content higher than that of ambient air is used in the second operation mode, the gas mixture comprising at least 30%, 40%, 50%, 60%, 70%, 80%, 90% or 95% oxygen by volume.

12. The method (100) according to any one of the preceding claims, wherein only gases or gas mixtures which are poor in or free from nitrogen are introduced into the Claus furnace (11) in the second operation mode

13. An apparatus for treatment of a sour gas mixture by means of a Claus process (10), wherein the sour gas mixture contains hydrogen sulphide and carbon dioxide and wherein means are provided which are configured to introduce the sour gas mixture into a Claus furnace (11) and to oxidize a part of the hydrogen sulphide in the sour gas mixture by free-flame oxidation in the Claus furnace (11), **characterized by** means at least configured to operate the apparatus in a first operation mode in which an amount of air is fed into the Claus furnace (11) in order to provide oxygen for the free-flame oxidation, and to operate the apparatus in a second mode in which instead of at least a part of the amount of air pure oxygen or a gas mixture comprising an oxygen content higher than that of ambient air is introduced into the Claus furnace (11) in order to provide the oxygen for the free-flame oxidation, wherein the apparatus is configured to provide, in the first operation mode, the amount of air at least in part in the form of air compressed by a main air compressor (11) of an air separation unit (20) and wherein the apparatus is configured to provide, in the second operation mode, the pure oxygen or the gas mixture comprising an oxygen content higher than that of ambient air at least in part in the form of an air separation product provided by the air separation unit (20).

14. An apparatus according to claim 13 comprising means adapted to perform a method according to any one of claims 1 to 12.

## Patentansprüche

1. Verfahren (100) zur Behandlung eines Sauergasgemisches mittels eines Claus-Prozesses (10), wobei das Sauergasgemisch Schwefelwasserstoff und Kohlendioxid enthält, wobei das Sauergasgemisch in einen Claus-Ofen (11) eingeleitet wird und wobei ein Teil des Schwefelwasserstoffs in dem Sauergasgemisch durch Freiflammenoxidation in dem Claus-Ofen (11) oxidiert wird, **dadurch gekennzeichnet, dass** das Verfahren (100) mindestens einen ersten Betriebsmodus, bei dem eine Luftmenge in den Claus-Ofen (11) eingespeist wird, um Sauerstoff für die Freiflammenoxidation bereitzustellen, und einen zweiten Modus umfasst, bei dem anstelle mindestens eines Teils der Luftmenge reiner Sauerstoff oder ein Gasgemisch, das einen höheren Sauerstoffgehalt umfasst als der von Umgebungsluft, in den Claus-Ofen (11) eingeleitet wird, um den Sauerstoff für die Freiflammenoxidation bereitzustellen, wobei in dem ersten Betriebsmodus die Luftmenge mindestens teilweise in Form von durch einen Hauptluftkompressor (21) einer Luftzerlegungseinheit (20) komprimierte Luft bereitgestellt wird und wobei in dem zweiten Betriebsmodus der reine Sauerstoff oder das Gasgemisch, das einen höheren Sauerstoffgehalt als der von Umgebungsluft umfasst, mindestens teilweise in Form eines von der Luftzerlegungseinheit (20) bereitgestellten Luftzerlegungsprodukts bereitgestellt wird.

2. Verfahren (100) nach Anspruch 1, umfassend einen Zwischenbetriebsmodus, bei dem die in den Claus-Ofen (11) eingespeiste Luftmenge allmählich oder stufenweise durch den reinen Sauerstoff oder durch das Gasgemisch, das einen höheren Sauerstoffgehalt als der von Umgebungsluft umfasst, ersetzt wird, um von dem ersten Betriebsmodus zu dem zweiten Betriebsmodus zu wechseln.

2. Verfahren (100) nach Anspruch 1 oder 2, wobei die Luftmenge in dem ersten Betriebsmodus bei einem Einspeisedruckniveau zwischen 1 und 3 bar in den Claus-Ofen (11) eingespeist wird.

3. Verfahren (100) nach Anspruch 2, wobei die in dem ersten Betriebsmodus in den Claus-Ofen (11) eingespeiste Luftmenge dem Hauptluftkompressor (21) bei dem Einspeisedruckniveau entnommen wird und wobei weitere Luft in dem Hauptluftkompressor (21) auf ein höheres Enddruckniveau als das Einspeisedruckniveau komprimiert wird.

4. Verfahren (100) nach Anspruch 2, wobei die in dem ersten Betriebsmodus in den Claus-Ofen (11) eingespeiste Luftmenge dem Hauptluftkompressor (21) zusammen mit weiterer in dem Hauptluftkompressor (21) komprimierten Luft bei einem höheren Enddruckniveau als das Einspeisedruckniveau entnommen wird und anschließend auf das Einspeisedruckniveau entspannt wird.

5. Verfahren (100) nach einem der Ansprüche 3 oder 4, wobei die Luftzerlegungseinheit (20) eine kryogene Luftzerlegungseinheit (20) ist, die ein Rektifiziersäulensystem (24) umfasst, und wobei das Enddruckniveau bei oder über einem höchsten Betriebsdruck des Rektifiziersäulensystems (24) liegt.

6. Verfahren (100) nach Anspruch 5, wobei das Enddruckniveau mindestens 4 bar über dem höchsten Betriebsdruck des Rektifiziersäulensystems (24) liegt.

7. Verfahren (100) nach Anspruch 1 oder 2, wobei die gesamte Luft dem Hauptluftkompressor (21) in dem ersten Betriebsmodus bei dem Einspeisedruckniveau entnommen wird.

8. Verfahren (100) nach einem der vorstehenden Ansprüche, wobei eine Menge aus der Luftzerlegungseinheit (20) abgezogener Luftprodukte in dem ersten Betriebsmodus geringer als in dem zweiten Betriebsmodus ist.

9. Verfahren (100) nach einem der vorstehenden Ansprüche, wobei ein Betrieb der Luftzerlegungseinheit (20) in dem ersten Betriebsmodus ausgesetzt wird.

10. Verfahren (100) nach einem der vorstehenden Ansprüche, wobei die Luftmenge in dem ersten Betriebsmodus bei einer Temperatur von 20 bis 150 °C aus dem Hauptluftkompressor (21) abgezogen und in den Claus-Ofen (11) eingespeist wird.

11. Verfahren (100) nach einem der vorstehenden Ansprüche, wobei das Gasgemisch, das einen höheren Sauerstoffgehalt umfasst als der von Umgebungsluft, in dem zweiten Betriebsmodus verwendet wird, wobei das Gasgemisch mindestens 30 Vol.-%, 40 Vol.-%, 50 Vol.-%, 60 Vol.-%, 70 Vol.-%, 80 Vol.-%, 90 Vol.-% oder 95 Vol.-% Sauerstoff umfasst.

12. Verfahren (100) nach einem der vorstehenden Ansprüche, wobei in dem zweiten Betriebsmodus ausschließlich Gase oder Gasgemische, die stickstoffarm oder -frei sind, in den Claus-Ofen (11) eingeleitet werden

13. Vorrichtung zur Behandlung eines Sauergasgemisches mittels eines Claus-Prozesses (10), wobei das Sauergasgemisch Schwefelwasserstoff und Kohlendioxid enthält und wobei Mittel bereitgestellt sind, die eingerichtet sind, um das Sauergasgemisch in einen Claus-Ofen (11) einzuleiten und einen Teil des Schwefelwasserstoffs in dem Sauergasgemisch durch Freiflammenoxidation in dem Claus-Ofen (11) zu oxidieren, **gekennzeichnet durch** Mittel, die mindestens eingerichtet sind, um die Vorrichtung in einem ersten Betriebsmodus zu betreiben, bei dem eine Luftmenge in den Claus-Ofen (11) eingespeist wird, um Sauerstoff für die Freiflammenoxidation bereitzustellen, und die Vorrichtung in einem zweiten Modus zu betreiben, bei dem anstelle mindestens eines Teils der Luftmenge reiner Sauerstoff oder ein Gasgemisch, das einen höheren Sauerstoffgehalt als der von Umgebungsluft umfasst, in den Claus-Ofen (11) eingeleitet wird, um den Sauerstoff für die Freiflammenoxidation bereitzustellen, wobei die Vorrichtung eingerichtet ist, um in dem ersten Betriebsmodus die Luftmenge mindestens teilweise in Form von durch einen Hauptluftkompressor (11) einer Luftzerlegungseinheit (20) komprimierte Luft bereitzustellen, und wobei die Vorrichtung eingerichtet ist, um in dem zweiten Betriebsmodus den reinen Sauerstoff oder das Gasgemisch, das einen höheren Sauerstoffgehalt als der von Umgebungsluft umfasst, mindestens teilweise in Form eines von der Luftzerlegungseinheit (20) bereitgestellten Luftzerlegungsprodukts bereitzustellen.

14. Vorrichtung nach Anspruch 13, umfassend Mittel, die zum Ausführen eines Verfahrens nach einem der Ansprüche 1 bis 12 angepasst sind.

## Revendications

1. Procédé (100) de traitement d'un mélange gazeux acide au moyen d'un processus Claus (10), dans lequel le mélange gazeux acide contient du sulfure d'hydrogène et du dioxyde de carbone, dans lequel le mélange gazeux acide est introduit dans un four Claus (11), et dans lequel une partie du sulfure d'hydrogène dans le mélange gazeux acide est oxydée par oxydation à flamme libre dans le four Claus (11), **caractérisé en ce que** le procédé (100) comprend au moins un premier mode de fonctionnement dans lequel une quantité d'air est alimentée dans le four Claus (11) afin de fournir de l'oxygène pour l'oxydation à flamme libre, et un deuxième mode dans lequel au lieu d'au moins une partie de la quantité d'air de l'oxygène pur ou un mélange gazeux comprenant une teneur en oxygène supérieure à celle de l'air ambiant est introduit dans le four Claus (11) afin de fournir l'oxygène pour l'oxydation à flamme libre, dans lequel dans le premier mode de fonctionnement la quantité d'air est au moins en partie fournie sous la forme d'air comprimé par un compresseur d'air principal (21) d'une unité de séparation d'air (20), et dans lequel dans le deuxième mode de fonctionnement l'oxygène pur ou le mélange gazeux comprenant une teneur en oxygène supérieure à celle de l'air ambiant est au moins en partie fourni sous la forme de produit de séparation d'air fourni par l'unité de séparation d'air (20).

2. Procédé (100) selon la revendication 1, comprenant un mode de fonctionnement intermédiaire dans lequel la quantité d'air alimentée dans le four Claus (11) est remplacée par l'oxygène pur ou par le mélange gazeux comprenant une teneur en oxygène supérieure à celle de l'air ambiant d'une manière progressive ou par paliers, afin de passer du premier mode de fonctionnement au deuxième mode de fonctionnement.

2. Procédé (100) selon la revendication 1 ou 2, dans lequel la quantité d'air est alimentée dans le four Claus (11) dans le premier mode de fonctionnement à un niveau de pression d'alimentation entre 1 et 3 bar.

3. Procédé (100) selon la revendication 2, dans lequel la quantité d'air alimentée dans le four Claus (11) dans le premier mode de fonctionnement est prélevée à partir du compresseur d'air principal (21) au niveau de pression d'alimentation et dans lequel de l'air supplémentaire est comprimé dans le compresseur d'air principal (21) jusqu'à un niveau de pression final supérieur au niveau de pression d'alimentation.

4. Procédé (100) selon la revendication 2, dans lequel la quantité d'air alimentée dans le four Claus (11) dans le premier mode de fonctionnement est prélevée à partir du compresseur d'air principal (21) conjointement avec de l'air supplémentaire comprimé dans le compresseur d'air principal (21) à un niveau de pression final supérieur au niveau de pression d'alimentation et est ensuite détendue au niveau de pression d'alimentation.

5. Procédé (100) selon l'une quelconque des revendications 3 ou 4, dans lequel l'unité de séparation d'air (20) est une unité de séparation cryogénique d'air (20) comprenant un système de colonne de rectification (24), et dans lequel le niveau de pression final est égal ou supérieur à une pression de fonctionnement la plus élevée du système de colonne de rectification (24).

6. Procédé (100) selon la revendication 5, dans lequel le niveau de pression final est au moins 4 bar au-dessus de la pression de fonctionnement la plus élevée du système de colonne de rectification (24).

7. Procédé (100) selon la revendication 1 de 2, dans lequel tout l'air est prélevé à partir du compresseur d'air principal (21) dans le premier mode de fonctionnement au niveau de pression d'alimentation.

8. Procédé (100) selon l'une quelconque des revendications précédentes, dans lequel une quantité de produits d'air retirés de l'unité de séparation d'air (20) est plus basse dans le premier mode de fonctionnement que dans le deuxième mode de fonctionnement.

9. Procédé (100) selon l'une quelconque des revendications précédentes dans lequel un fonctionnement de l'unité de séparation d'air (20) est suspendu dans le premier mode de fonctionnement.

10. Procédé (100) selon l'une quelconque des revendications précédentes dans lequel la quantité d'air est prélevée du compresseur d'air principal (21) et alimentée dans le four Claus (11) dans le premier mode de fonctionnement à une température de 20 à 150 °C.

11. Procédé (100) selon l'une quelconque des revendications précédentes dans lequel le mélange gazeux comprenant une teneur en oxygène supérieure à celle de l'air ambiant est utilisé dans le deuxième mode de fonctionnement, le mélange gazeux comprenant au moins 30 %, 40 %, 50 %, 60 %, 70 %, 80 %, 90 % ou 95 % d'oxygène en volume.

12. Procédé (100) selon l'une quelconque des revendications précédentes, dans lequel seuls des gaz ou mélanges gazeux qui sont pauvres en ou exempts d'azote sont introduits dans le four Claus (11) dans le deuxième mode de fonctionnement

13. Appareil de traitement d'un mélange gazeux acide au moyen d'un processus Claus (10), dans lequel le mélange gazeux acide contient du sulfure d'hydrogène et du dioxyde de carbone et dans lequel on fournit des moyens qui sont configurés pour introduire le mélange gazeux acide dans un four Claus (11) et pour oxyder une partie du sulfure d'hydrogène dans le mélange gazeux acide par oxydation à flamme libre dans le four Claus (11), **caractérisé par** des moyens configurés au moins pour faire fonctionner l'appareil dans un premier mode de fonctionnement dans lequel une quantité d'air est alimentée dans le four Claus (11) afin de fournir de l'oxygène pour l'oxydation à flamme libre, et pour faire fonctionner l'appareil dans un deuxième mode dans lequel au lieu d'au moins une partie de la quantité d'air de l'oxygène pur ou un mélange gazeux comprenant une teneur en oxygène supérieure à celle de l'air ambiant est introduit dans le four Claus (11) afin de fournir l'oxygène pour l'oxydation à flamme libre, dans lequel l'appareil est configuré pour fournir, dans le premier mode de fonctionnement, la quantité d'air au moins en partie sous la forme d'air comprimé par un compresseur d'air principal (11) d'une unité de séparation d'air (20) et dans lequel l'appareil est configuré pour fournir, dans le deuxième mode de fonctionnement, l'oxygène pur ou le mélange gazeux comprenant une teneur en oxygène supérieure à celle de l'air ambiant au moins en partie sous la forme de produit de séparation d'air fourni par l'unité de séparation d'air (20).

14. Appareil selon la revendication 13 comprenant des moyens conçus pour mettre en oeuvre un procédé selon l'une quelconque des revendications 1 à 12.
